# EUROPÄISCHE PATENTANMELDUNG

(11) **EP 4 199 162 A1**
(43) Veröffentlichungstag der Anmeldung: **21.06.2023**
(21) Anmeldenummer: 21215980.0
(22) Anmeldetag: 20.12.2021
(51) Int. Cl.: H01M 10/04, H01M 10/0525, H01M 50/121, H01M 50/166, H01M 50/538, H01M 50/548, H01M 10/058, H01M 10/12

(54) **BATTERIE MIT KUNSTSTOFFGEHÄUSE SOWIE HERSTELLUNGSVERFAHREN**

(71) Anmelder: Wyon AG, 9050 Appenzell Steinegg (CH)
(72) Erfinder: Bernholz, Uwe, 9058 Brülisau (CH)
(74) Vertreter: Keller Schneider Patent- und Markenanwälte AG

(57) **Zusammenfassung**

Die vorliegende Anmeldung betrifft eine Batterie. Gemäss der Erfindung umfasst die Batterie ein Gehäuse aus Kunststoff, welches einen durch eine Innenwandung des Gehäuses begrenzten Hohlraum aufweist, in welchem ein Elektrodenstapel angeordnet und eine Elektrolytlösung eingefüllt ist. Mindestens ein Kontaktelement ragt von einer Oberfläche des Gehäuses durch das Gehäuse zumindest teilweise in den Hohlraum. Innerhalb des Hohlraumes ist mindestens ein Ableiterelement aus einem leitendem Material angeordnet, der mit dem mindestens einen Kontaktelement leitend verbunden ist. Das mindestens eine Ableiterelement ist derart im Hohlraum angeordnet, dass Elektrodenfahnen gleichgepolter Elektroden des Elektrodenstapels klemmend zwischen mindestens einer ersten Fläche des mindestens einen Ableiterelements und der Innenwandung gehalten sind.

## Beschreibung

### Technisches Gebiet

Die Erfindung betrifft eine Batterie, insbesondere eine Lithium-Ionen Batterie, mit einem Gehäuse aus Kunststoff sowie mindestens einem Kontaktelement, welches von einer Oberfläche des Gehäuses zumindest teilweise in einen Hohlraum des Gehäuses ragt. Ferner betrifft die vorliegende Erfindung ein Verfahren zur Herstellung einer derartigen Batterie.

### Stand der Technik

Eine Batterie ist ein elektrochemischer Energiespeicher und ein Energiewandler. Bei der Entladung wird gespeicherte chemische Energie in elektrische Energie umgewandelt. Diese kann von einem vom Stromnetz unabhängigen elektrischen Endgerät genutzt werden. Eine besondere Herausforderung an die Grösse, Sicherheit und Leistungsfähigkeit einer Batterie stellt die elektrische Versorgung medizinischer Geräte dar, die teilweise oder ganz implantiert werden, wie zum Beispiel Herzschrittmacher, Hörgeräte, Insulinpumpen und Medikamentendispenser. Auch für Unterhaltungsgeräte des täglichen Gebrauchs werden stets kleinere Batterien mit unverminderter Leistung und Laufzeit nachgefragt.

Primärbatterien können nur einmal entladen und nicht wieder aufgeladen werden. In diesen Batterien sind die elektrochemischen Reaktionen zwar teilweise umkehrbar, führen aber nicht mehr zur Wiederherstellung eines dem Neuzustand ähnlichen Energieinhalts.

Sekundärbatterien, auch Akkumulatoren genannt, können nach deren Entladung wieder in einen weitgehend einem Neuzustand entsprechenden Energieinhalt gebracht werden, so dass eine wiederholte Umwandlung von chemischer in elektrischer Energie und zurück möglich ist. Es sind unterschiedliche Arten von Sekundärbatterien bekannt. Wegen ihrer hohen Energiedichte werden Lithium-Ionen Batterien bei vielen Anwendungen bevorzugt.

Bei beiden Batterietypen besteht ein Problem darin, die durch die elektrochemischen Umwandlungsreaktionen erzeugte elektrische Energie aus der Batterie und bei Sekundärzellen umgekehrt auch wieder in die Batterie zu leiten, insbesondere wenn die Batterie ein Gehäuse aus einem Kunststoff aufweist, der nicht oder nur sehr schwach leitend ist.

Insbesondere Sekundärbatterien weisen üblicherweise einen Elektrodenstapel auf, in welchem eine Mehrzahl an Anoden- und Kathodenschichten angeordnet sind. Elektrischer Strom muss von jeder dieser Elektrodenschichten abgeleitet werden können, was üblicherweise mittels sog. Elektrodenfahnen aus einem leitenden Material geschieht. Diese Elektrodenfahnen müssen gebündelt bzw. deren Strom gesammelt und anschliessend aus der Batterie geleitet werden, insbesondere über Kontaktelemente. Bei Sekundärbatterien wird zum Laden der Sekundärbatterie Strom über die Kontaktelemente und den Elektrodenfahnen den jeweiligen Elektroden zugeführt. Es stellt sich regelmässig das Problem, wie die Elektrodenfahnen möglichst kompakt, kurzschluss- und beschädigungssicher zusammengeführt bzw. gebündelt und mit den Kontaktelementen verbunden werden können.

Die DE 29 06 853 (SAFT - Societe des Accumulateurs Fixes et de Traction SA) offenbart einen Akkumulator mit zwei Sätzen von Elektrodenplatten, die elektrisch mit je einem der beiden Pole verbunden sind. Die Pole sind durch den Akkumulatordeckel geführt und an einem äusseren Teil mit elektrischen Anschlüssen versehen, während die Elektroden über Metallstreifen an den innerhalb des Akkumulators liegenden Polteil angeschlossen sind. Die Befestigung der übereinander gelegten Metallstreifen am Zellenpol erfolgt mit Hilfe von Schweissen, Nieten oder Verschrauben. In einer Ausführungsform werden die Metallstreifen unter Zwischenlagerung einer Scheibe gegen den Zellenpol mittels einer Schraube gepresst.

Die US 2010/01233527 A1 (International Battery Inc.) beschreibt Batterieanschlüsse, insbesondere für Lithium-Ionen Batterien. Die Elektrodenfahnen der Kathoden und Anoden werden jeweils in zwei Gruppen zusammengefasst. Die Elektrodenfahnen sind mittels eines Niets oder einer Schraube mit einem jeweiligen Durchführungsblock verbunden. Der Durchführungsblock verfügt über einen Grundkörper, aus welchem ein Durchführungszapfen ragt, sowie einer Durchgangsbohrung. Die Elektrodenfahnen werden gesammelt und aufeinander gelegt bevor in diesen ein Loch für das Niet oder die Schraube eingebracht wird. Die Elektrodenfahnen können zusätzlich in einer Muffe gesammelt werden, um diese besser aneinander zu pressen. Die Elektrodenfahnen werden über das Niet oder die Schraube auf den Durchführungsblock geklemmt.

Die WO 95/16282 (Valence Technology Inc.) bezieht sich auf Vorrichtungen zum Befestigen von Elektrodenfahnen von Batterien. Jede Elektrodenfahne verfügt über ein Loch, durch welches ein Befestigungselement durchgeführt werden kann. Das Befestigungselement kann ein Niet oder ein Bolzen sein. Eine erste Hälfte der Elektrodenfahnen der Anoden werden zwischen einer ersten Pressplatte und dem Pol angeordnet, während eine zweite Hälfte der Elektrodenfahnen zwischen dem Pol und einer zweiten Pressplatte angeordnet werden. Die Pressplatten werden durch Einführen eines Bolzens von der ersten Pressplatte her in eine Mutter auf der zweiten Pressplatte und anziehen desselben aufeinander und auf den Pol gepresst.

Die US 2005/0210660 A1 (Wenman Li) offenbart Verfahren zum Befestigen von Elektrodenfahnen von Batterien. In einem ersten Schritt werden die Elektrodenfahnen der Anoden sowie der Kathoden aufeinandergestapelt. Die Elektrodenfahnen werden aufeinander ausgerichtet und anschliessend wird ein Loch durch die Fahnenstapel gestanzt. Die Fahnenstapel werden in Polblöcke eingelegt und mittels mindestens eines Niets mit diesem verbunden.

### Darstellung der Erfindung

Aufgabe der Erfindung ist es, eine dem eingangs genannten technischen Gebiet zugehörende Batterie zu schaffen, welche eine möglichst einfache, platzsparende und zuverlässige Verbindung zwischen Elektrodenfahnen und einem Kontaktelement aufweist.

Die Lösung der Aufgabe ist durch die Merkmale des Anspruchs 1 definiert. Gemäss der Erfindung umfasst eine Batterie ein Gehäuse aus Kunststoff, welches einen durch eine Innenwandung des Gehäuses begrenzten Hohlraum aufweist, in welchem ein Elektrodenstapel angeordnet ist. Mindestens ein Kontaktelement ragt von einer Oberfläche des Gehäuses durch das Gehäuse zumindest teilweise in den Hohlraum. Innerhalb des Hohlraumes ist ein Ableiterelement aus einem leitendem Material angeordnet, der mit dem Kontaktelement leitend verbunden ist. Das Ableiterelement ist derart im Hohlraum angeordnet, dass Elektrodenfahnen gleichgepolter Elektroden des Elektrodenstapels klemmend zwischen mindestens einer ersten Fläche des Ableiterelements und der Innenwandung gehalten sind.

Durch das Einklemmen der Elektrodenfahnen zwischen dem Ableiterelement und der Innenwandung können diese auf eine einfache und platzsparende Art gesammelt und fixiert werden. Zudem lässt sich eine Übertragung von Strom von den Elektrodenfahnen auf das Kontaktelement mit einer geringen Anzahl an Komponenten realisieren. Dies vereinfacht die Herstellung der Batterie und führt zu tieferen Herstellungskosten.

Die erfindungsgemässe Batterie ist vorzugsweise eine Sekundärbatterie, insbesondere bevorzugt eine Lithium-Ionen Batterie.

Gehäuse aus Kunststoff können einfach, kostengünstig und mit kundenspezifischen Abmessungen, beispielsweise mittels Spritzguss, hergestellt werden. Ein Gehäuse aus Kunststoff ist vorzugsweise elektrolytbeständig, korrosionsbeständig und/oder elektrisch isolierend. Bei einem elektrisch isolierenden Gehäuse braucht kein Sicherheitsabstand zwischen der Gehäuseinnenwand und dem Elektrodenstapel eingehalten werden, das heisst der Elektrodenstapel kann die Innenwandung des Gehäuses berühren, so dass für den Elektrodenstapel bei gleichen Abmessungen des Gehäuses bzw. des Hohlraumes eine grössere Fläche zur Verfügung steht als bei einer Batterie mit elektrisch leitendem Gehäuse. Ebenso kann mit einer genauen Einpassung der Batterie in ein Gerät, was mit einem Gehäuse aus Kunststoff besonders einfach ist, nochmals zusätzlicher Energieinhalt gewonnen werden. Bei einem Gehäuse aus Kunststoff ist die Formgebung kaum eingeschränkt.

Vorteilhafterweise wird für das Gehäuse der Kunststoff LCP (flüssigkristalline Elastomere) oder Polyethylen (PE) eingesetzt. Vorzugsweise besteht das Gehäuse aus oder enthält Kohlenstofffasern verstärktes LCP.

Das Gehäuse aus Kunststoff weist vorzugsweise eine Wandstärke von weniger als 0.5 mm, im Besonderen von weniger als 0.3 mm, und im ganz besonderen von 0.2 mm oder weniger auf. Die Wandstärke spielt bei kleinen Batterien eine wesentliche Rolle, da bei vorgegebenen Aussenabmessungen der kleinen Batterie eine Verringerung der Wandstärke dazu genutzt werden kann, ein grösserer Elektrodenstapel in das Gehäuse einzubringen und damit die Kapazität der Batterie zu erhöhen.

Das Gehäuse ist vorzugsweise gasdicht, elektrolytbeständig, korrosionsbeständig und/oder elektrisch isolierend. Gasdichte Gehäuse ermöglichen eine lange Lebensdauer der Batterie, weil ein Ausgasen nicht möglich ist und auch keine unerwünschten Stoffe in den Hohlraum des Gehäuses hineindiffundieren können.

Vorzugsweise besteht das Gehäuse aus zwei Teilen, die bei der Herstellung gasdicht miteinander verbunden werden, z.B. durch Schweissen. Insbesondere kann das Gehäuse aus einem Gehäusebecher und einem Gehäusedeckel bestehen.

Vorzugsweise ist die erfindungsgemässe Batterie eine Kleinbatterie bzw. ein Kleinakkumulator mit einem Volumen von weniger als 30 cm³, insbesondere mit einem Volumen kleiner als 10 cm³, und im ganz besonderen mit einem Volumen von kleiner als 1 cm³. Kleinbatterien bzw. Kleinakkumulatoren können Knopfzellen sein. Knopfzellen können eine runde Form haben, wobei ihr Durchmesser vorzugsweise grösser ist als ihre Höhe. Alternativ kann aber eine Kleinbatterie bzw. ein Kleinakkumulator auch quaderförmig sein oder eine beliebige, gerätespezifische Form haben, wie beispielsweise eine Hufeisenform oder eine Tropfenform. Unter einer gerätespezifischen Form ist eine Form zu verstehen, die dem für eine Batterie verfügbaren Raum in dem Gerät entspricht oder den gerätespezifischen Raum besser ausnutzt, in dem Batterie eingesetzt werden soll.

Kleinbatterien bzw. Kleinakkumulatoren können eine Bauhöhe vom 6 mm oder weniger haben, insbesondere von 5 mm oder weniger. Diese verfügen bevorzugt über eine einzige Sekundärzelle, die wiederum aus einer Vielzahl von parallelgeschalteten Elektroden bestehen kann, wobei diese eine Nennspannung im Bereich von 1 V bis 5 V haben, insbesondere von 1.3 V bis 4 V, und im ganz besonderen von 3 V bis 3.8 V.

Der Elektrodenstapel verfügt über eine schichtförmige Anordnung von Elektroden. Jede Elektrode weist aktives Material auf bzw. ist mit aktivem Material beschichtet. Die Elektroden liegen vorzugsweise in der Form von Folien aus leitendem Material vor, auf welche das aktive Material aufgebracht oder welche mit dem aktiven Material beschichtet sind. An den negativen Elektroden ist Anodenmaterial angebracht und an den positiven Elektroden ist Kathodenmaterial angebracht. Dabei können die Elektroden einseitig oder beidseitig mit aktivem Material beschichtet sein. In einem Elektrodenstapel folgt auf eine negative Elektrode eine positive Elektrode. Dazwischen ist ein Separator als Trennschicht angeordnet. Ein Stapel von Elektroden kann eine Vielzahl von Elektroden aufweisen. Die Schichten einer Elektrodenart können vorzugsweise zwischen zwei Schichten des Separators eingeschweisst sein.

Der Elektrodenstapel weist vorzugsweise eine polyedrische Form auf. Ferner kann der Elektrodenstapel jedoch auch in der Form eines Zylinders oder in einer beliebig anderen Form, beispielsweise eine Hufeisens vorliegen. Die Form und Grösse des Elektrodenstapels ist dabei auf die Form und Grösse des Hohlraumes bzw. des Gehäuses angepasst.

Im Elektrodenstapel und/oder im Hohlraum des Gehäuses ist vorzugsweise eine Elektrolytlösung eingefüllt. Als Elektrolytlösung wird eine für den Typ der Batterie geeignete Lösung eingesetzt. Sofern die Batterie eine Lithium-Ionen Batterie bzw. Akkumulator ist, wird vorzugsweise eine nichtwässrige Elektrolytlösung, z.B. eine Salzlösung oder eine Polymerlösung eingesetzt.

Das mindestens eine Kontaktelement ist in einer Öffnung des Gehäuses angeordnet, wobei das mindestens eine Kontaktelement dichtend mit dem Gehäuse verbunden ist oder wobei zwischen dem mindestens einen Kontaktelement und dem Gehäuse eine Dichtung angeordnet ist. Mit dem Kontaktelement kann elektrischer Strom aus dem Hohlraum durch das Gehäuse hindurch nach aussen geleitet werden. Das mindestens eine Kontaktelement kann somit ausserhalb des Gehäuses als Kontakt dienen, mit welchem die Batterie leitend an einem Verbraucher angeschlossen werden kann.

Das mindestens eine Kontaktelement liegt vorzugsweise in der Form eines zylinderförmigen Stabes aus einem leitenden Material, insbesondere eines Metalls vor.

Dadurch, dass das mindestens eine Kontaktelement zumindest teilweise in den Hohlraum ragt, kann dieses auf einfache Weise leitend mit dem im Inneren des Hohlraumes angeordneten Ableiterelement verbunden werden, beispielsweise durch in Kontaktbringen des mindestens einen Kontaktelements mit dem Ableiterelement.

Die Elektrodenfahnen können als leitendes Gitter, leitendes Trägerband und/oder als leitende Folie ausgebildet sein, welche jeweils mit einer Elektrode verbunden und frei von aktivem Material sind.

Das mindestens eine Ableiterelement weist eine zum Klemmen der Elektrodenfahnen geeignete Form auf, wobei die mindestens eine Fläche insbesondere eine zum Bereich der Innenwandung, auf welche die Elektrodenfahnen geklemmt werden sollen, komplementäre Form aufweist. Das mindestens eine Ableiterelment ist vorzugsweise ein Volumenkörper, insbesondere ein Polyeder. Alternativ kann das mindestens eine Ableiterelement jedoch auch als Kugel, Ellipsoid oder Ovoid geformt sein.

Das mindestens eine Ableiterelement ist vorzugsweise ein Vollkörper. Alternativ kann das mindestens eine Ableiterelement jedoch auch als Hohlkörper ausgestaltet sein.

Dadurch, dass mittels des Ableiterelements die Elektrodenfahnen der gleichgepolten Elektroden des Elektrodenstapels gegen die Innenwandung geklemmt werden, kann einerseits elektrischer Strom von den Elektrodenfahnen in das Ableiterelement und umgekehrt fliessen und andererseits werden die Elektrodenfahnen sicher und zuverlässig fixiert.

Die Elektrodenfahnen gleichgepolter Elektroden sind vorzugsweise in einem Stapel angeordnet, wobei der Stapel der Elektrodenfahnen klemmend zwischen dem Ableiterelement und der Innenwandung gehalten wird. Alternativ können die Elektrodenfahnen der gleichgepolten Elektroden zwischen dem Ableiterelement und der Innenwandung jedoch auch nebeneinander liegend angeordnet sein.

Vorzugsweise verfügt die Batterie über zwei Kontaktelemente sowie über zwei Ableiterelemente, wobei die Elektrodenfahnen von positiven Elektroden des Elektrodenstapels zwischen mindestens der ersten Fläche eines ersten der zwei Ableiterelemente und der Innenwandung und die Elektrodenfahnen von negativen Elektrodenschichten des Elektrodenstapels zwischen mindestens der ersten Fläche eines zweiten der zwei Ableiterelemente und der Innenwandung klemmend gehalten sind.

Die beiden Ableiterelemente sind vorzugsweise voneinander beabstandet oder mittels einer Wandung aus nicht leitendem Material voneinander getrennt, so dass kein Kurzschluss entsteht. Vorzugsweise sind auch die Elektrodenfahnen der positiven Elektroden und diejenigen der negativen Elektroden jeweils voneinander beabstandet oder durch mindestens ein nicht leitendes Element getrennt, um Kurzschlüsse zu verhindern.

Das mindestens eine Kontaktelement ist vorzugsweise mindestens teilweise in einer Bohrung des mindestens einen Ableiterelements aufgenommen. Die Bohrung weist dabei im Wesentlichen dieselbe Form und Dimensionen wie das mindestens eine Kontaktelement auf. Dadurch kann eine sichere Verbindung zwischen dem mindestens einen Ableiterelement sowie dem mindestens einen Kontaktelement gewährleistet werden.

Die Bohrung ist bevorzugt auf der ersten Fläche des Ableiterelements angeordnet, wobei die Elektrodenfahnen durch das Kontaktelement durstossen sind. Dadurch wird zusätzlich ein direkter, leitender Kontakt zwischen den Elektrodenfahnen und dem Kontaktelement ermöglicht. Ferner werden die Elektrodenfahnen zusätzlich zur kraftschlüssigen Verbindung durch das Klemmen dadurch formschlüssig zwischen dem mindestens einen Ableiterelement und der Innenwandung fixiert.

Das Kontaktelement ist vorzugsweise als Schraube ausgestaltet. In diesem Fall weist die Bohrung bevorzugt ein Innengewinde auf, welches komplementär mit dem Gewinde des als Schraube ausgestalteten Kontaktelements ist. Alternativ das als Schraube ausgestaltete Kontaktelement jedoch über ein selbstschneidendes Gewinde verfügen, welches sich beim Einschrauben in die Bohrung in das Ableiterelement schneidet.

Durch das Verschrauben kann nebst einer zuverlässigen Fixierung des Kontaktelements im Ableiterelement zudem die zur Klemmung der Elektrodenfahnen zwischen dem Ableiterelement und der Innenwand nötige Klemmkraft erzeugt oder eine bestehende Klemmkraft erhöht werden.

Um ein Verdrehen des Ableiterelements beim Einschrauben eines als Schraube ausgestalteten Kontaktelements zu verhindern, was mitunter zu Rissen in den Elektrodenfahnen führen könnte, muss diese entsprechend vor Verdrehen gesichert werden, beispielsweise durch entsprechende Halterungen auf der Innenwandung des Gehäuses oder durch Anordnen einer Montagehilfe.

Bevorzugt weist das mindestens eine Kontaktelement eine insbesondere selbstschneidende Spitze auf. Dadurch kann das mindestens eine Kontaktelement bei der Herstellung der Batterie sich selbst durch die Elektrodenfahnen bohren bzw. schneiden. Dadurch müssen keine Elektrodenfahnen mit einer Durchführungsöffnung verwendet werden und es ist auch nicht nötig, die Durchführungsöffnungen der Elektrodenfahnen z.B. bei Stapeln der Elektrodenfahnen aufeinander auszurichten. Dadurch kann die Herstellung der Batterie wesentlich vereinfacht werden.

Alternativ kann das mindestens eine Kontaktelement jedoch auch über eine nichtschneidende Spitze verfügen, insbesondere über eine flache Spitze. In diesem Fall werden die Elektrodenfahnen vorgängig mit einer Durchführungsöffnung versehen, durch welche das mindestens eine Kontaktelement durchgeführt werden kann.

Das Ableiterelement ist vorzugsweise als Quader ausgestaltet. Vorzugsweise sind die Elektrodenfahnen zusätzlich zwischen mindestens einer weiteren Fläche des Ableiterelements und der Innenwandung klemmend gehalten. Die erhöht einerseits die Kontaktfläche zwischen dem Ableiterelement sowie den Elektrodenfahnen und erhöht andererseits die Kraft, mit denen die Elektrodenfahnen klemmend zwischen dem Ableiterelement und der Innenwandung gehalten werden.

Vorzugsweise sind die Elektrodenfahnen zusätzlich zwischen zwei weiteren Flächen des Ableiterelements und der Innenwandung klemmend gehalten. Die beiden weiteren Flächen sind vorzugsweise parallel zueinander angeordnet. Das heisst, dass die beiden weiteren Flächen beim quaderförmigen Ableiterelement einander gegenüberliegen. Das Ableiterelement ist dabei vorzugsweise derart geformt und dimensioniert, dass dieser derart innerhalb des Hohlraumes platziert werden kann, dass zwischen den beiden weiteren Flächen und der Innenwandung des Hohlraumes gerade genug Platz vorhanden ist, um alle Elektrodenfahnen der gleichgepolten Elektroden zwischen dem Ableiterelement und der Innenwandung einzulegen.

Vorzugsweise weisen die Elektrodenfahnen zwischen dem Elektrodenstapel und dem mindestens einen Ableiterelement jeweils mindestens eine Biegung zur Zugentlastung auf. Dadurch können Beschädigungen der Elektrodenfahnen n bei Bewegungen zwischen Ableiterelement und Elektrodenstapel grösstenteils verhindert werden.

Vorzugsweise weisen die Elektrodenfahnen zwischen dem Elektrodenstapel und dem Ableiterelement eine Schlaufe auf. Mittels einer Schlaufe kann eine besonders gute Zugentlastung erzielt werden.

Das mindestens eine Ableiterelement besteht vorzugsweise aus einem Metall, insbesondere aus Aluminium, Nickel oder Kupfer. Metalle lassen sich einfach zu einem Ableiterelement mit einer spezifischen Form formen, z.B. durch Druckguss, Fräsen oder Sintern. Zudem ist ein Ableiterelement aus Metall formstabil, weist eine hohe Zugfestigkeit und eine gute elektrische Leitfähigkeit auf.

Alternativ kann das mindestens eine Ableiterelement jedoch auch aus einem elektrisch leitfähigen Polymer bestehen.

Die vorliegende Erfindung bezieht sich ferner auf ein Verfahren zur Herstellung einer Batterie, insbesondere eine Batterie gemäss vorangehender Beschreibung. In einem ersten Schritt des Verfahrens wird ein Elektrodenstapel auf einer Montagehilfe angeordnet. Anschliessend werden Elektrodenfahnen gleichpoliger Elektroden des Elektrodenstapels zwischen einer Innenwandung eines offenen Gehäuses aus Kunststoff oder einem Deckelelement aus Kunststoff und mindestens einer ersten Fläche mindestens eines Ableiterelements aus einem leitfähigen Material angeordnet. Die Elektrodenfahnen sind vorzugsweise aufeinander gestapelt. Das Ableiterelement wird derart im Gehäuse oder am Deckelelement befestigt, dass die Elektrodenfahnen klemmend zwischen einer Innenwandung des Gehäuses oder des Deckelelements und dem Ableiterelement gehalten werden. Anschliessend wird die Montagehilfe entfernt und die Batterie zusammengebaut.

Beim erfindungsgemässen Verfahren zur Herstellung einer Batterie kann das Gehäuse der Batterie grundsätzlich in zwei Varianten vorliegen: In einer ersten Variante weist das Gehäuse eine Öffnung auf, welche mittels des Deckelelements verschlossen werden kann. In einer zweiten Variante weist das Gehäuse zwei Teile auf, welche beim Zusammenbau der Batterie zusammengefügt werden.

Die Montagehilfe weist insbesondere Mittel auf, mit denen der Elektrodenstapel präzise relativ zum Deckelelement bzw. innerhalb des offenen Gehäuses angeordnet werden kann.

Vorzugsweise werden beim Verfahren die Elektrodenfahnen der beiden Elektrodenarten, also von den Kathoden- und Anodenschichten zwischen der Innenwandung des Gehäuses bzw. des Deckelements und jeweils eines separaten Ableiterelements angeordnet. Ferner werden beide Ableiterelemente jeweils mit einem separaten Kontaktelement befestigt.

Der Zusammenbau der Batterie beinhaltet bei der ersten Variante des Gehäuses das Einbringen des Elektrodenstapels in den Hohlraum des Gehäuses, das Füllen des Hohlraumes und/oder des Elektrodenstapels mit einer Elektrolytlösung sowie das Verschliessen der Öffnung mit dem Deckelement sowie vorzugsweise je nach Typ der Batterie noch weitere Montageschritte. Bei der zweiten Variante des Gehäuses umfasst der Zusammenbau der Batterie das Füllen des Hohlraums und/oder des Elektrodenstapels mit einer Elektrolytlösung, das das Verschliessen des Gehäuses, sowie vorzugsweise je nach Typ der Batterie noch weitere Montageschritte.

Weiter liegt beim Verfahren die Montagehilfe vorzugsweise in der Form eines Keils vor, der an seinem spitzen Ende über eine Nase verfügt, wobei die Montagehilfe vor dem Schritt a) derart auf einen Innenwandung des offenen Gehäuses aufgelegt wird, dass die Nase von der Innenwandung weg gerichtet ist. Zwischen den Schritten des Anordnens der Elektrodenfahnen und dem Befestigen des Ableiterelements werden die Elektrodenfahnen über diese Nase aufgelegt, so dass zwischen dem Elektrodenstapel und dem Ableiterelement dadurch eine Biegung zur Zugentlastung in den Elektrodenfahnen entsteht. Dieser Schritt wird insbesondere bei der Verwendung der zweiten Variante des Gehäuses angewendet.

Vorzugsweise wird zwischen dem Anordnen des Elektrodenstapels auf der Montagehilfe und dem Anordnen der Elektrodenfahnen das mindestens eine Ableiterelement in einer definierten Position relativ zum Elektrodenstapel auf der Montagehilfe angeordnet, wobei die Elektrodenfahnen anschliessend auf das Ableiterelement aufgelegt und schlussendlich das Deckelelement auf die Elektrodenfahnen angeordnet wird. Diese Schritte werden insbesondere bei der Verwendung der ersten Variante des Gehäuses angewendet.

Nach dem Entfernen der Montagehilfe wird das mindestens eine Ableiterelement vorzugsweise relativ zum Elektrodenstapel abgedreht, insbesondere um 90°, so dass das mindestens eine Ableiterelement in Richtung des Elektrodenstapels weist, wobei beim Schritt des Zusammenbaus der Batterie der Elektrodenstapel zuerst durch eine Öffnung in ein Gehäuse eingeschoben und anschliessend die Öffnung durch das Deckelelement verschlossen wird.

Zur Befestigung des mindestens einen Ableiterelements im Gehäuse oder am Deckelelement wird vorzugsweise ein Kontaktelement in der Form einer Schraube verwendet, welches durch eine Öffnung des Gehäuses oder des Deckelelements durchgeführt und zumindest teilweise in eine Bohrung des Ableiterelements eingeführt wird. Der Kopf der Schraube kann als Kontaktfläche verwendet werden, welcher zur elektrischen Verbindung der Batterie mit einem Verbraucher verwendet werden kann.

Vorzugsweise verfügt die Schraube über eine insbesondere selbstschneidende Spitze, mit welcher die aufeinander gestapelten Elektrodenfahnen durchstochen bzw. durchschnitten werden. Durch das Durchstechen bzw. Durchschneiden der Elektrodenfahnen, welche insbesondere aufeinander gestapelt sind, können diese nebst der Klemmung auch mechanisch vor Verrutschen gesichert werden.

Das mindestens eine Ableiterelement wird vorzugsweise durch Eingriff eines Gewindes des als Schraube ausgebildeten Kontaktelements in ein Innengewinde der Bohrung mit dem Gehäuse oder dem Deckelelement befestigt. Dies ermöglicht eine besonders einfache Befestigung des Volumenkörpers am Gehäuse bzw. am Deckelelement. Ferner kann dadurch ein guter Anpressdruck des Ableiterelements an die Innenseite des Gehäuses bzw. des Deckelelements erzielt werden, so dass die Elektrodenfahnen sicher klemmend gehalten werden und eine zuverlässige leitende Verbindung hergestellt wird.

### Kurze Beschreibung der Zeichnungen

Die zur Erläuterung des Ausführungsbeispiels verwendeten Zeichnungen zeigen:
- Fig. 1: einen schematischen Seitenriss einer ersten Ausführungsform einer erfindungsgemässen Batterie;
- Fig. 2: ein Detail aus dem Herstellungsverfahren für die Ausführungsform der erfindungsgemässen Batterie gemäss der Fig. 1 als schematisches Schnittbild;
- Fig. 3: eine zweite Ausführungsform einer erfindungsgemässen Batterie in einem schematischen Seitenriss;
- Fig. 4: ein Detail aus dem Herstellungsverfahren für die Ausführungsform der erfindungsgemässen Batterie gemäss der Fig. 3 als schematisches Schnittbild.

Grundsätzlich sind in den Figuren gleiche Teile mit gleichen Bezugszeichen versehen.

### Wege zur Ausführung der Erfindung

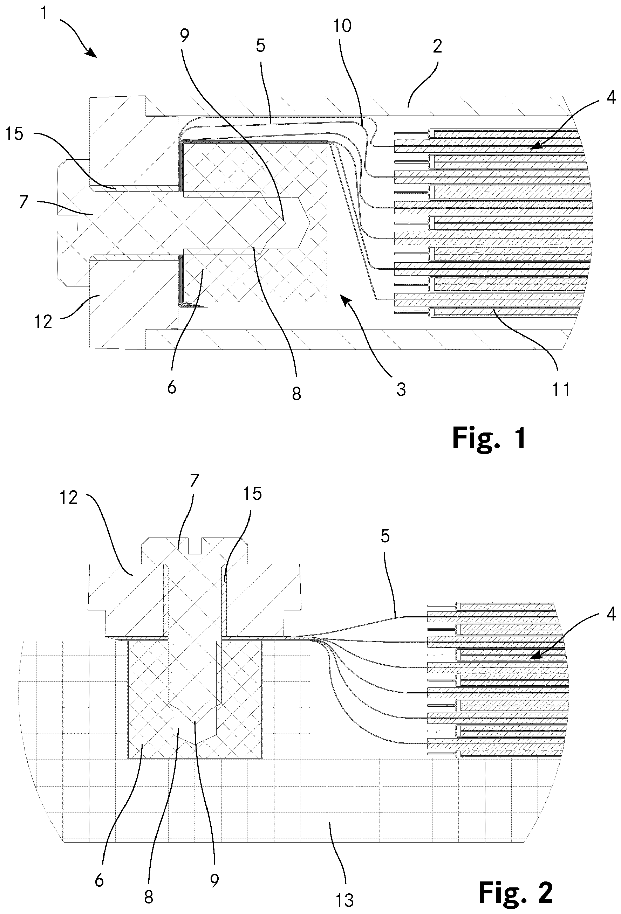

Die Fig. 1 zeigt einen schematischen Seitenriss einer ersten Ausführungsform der erfindungsgemässen Batterie 1. Die Batterie 1 weist ein Gehäuse 2 aus Kunststoff auf, welches einen durch eine Innenwandung des Gehäuses begrenzten Hohlraum 3 umfasst. Das Gehäuse 2 weist eine Öffnung auf, welche durch ein Deckelelement 12 verschlossen ist. Im Hohlraum 3 ist ein Elektrodenstapel 4 angeordnet, der aus Kathoden- und Anodenschichten besteht. Die Kathoden- und Anodenschichten sind durch Separatoren aus einem nicht leitenden Material voneinander getrennt. Die Kathoden- bzw. Anodenschichten weisen je eine Elektrodenfahne 5 auf, welche mit einem Kontaktelement 7 leitend verbunden sind. Die Elektrodenfahnen 5 der Anodenschichten sowie die Elektrodenfahnen 5 der Kathodenschichten sind jeweils separat je mit einem Kontaktelement 7 verbunden. Auf dem Schnittbild der Fig. 1 ist nur ein Kontaktelement 7 zu sehen, welches mit den Elektrodenfahnen 5 der Kathodenschichten elektrisch verbunden ist. Das Kontaktelement 7 ist bei der gezeigten Ausführungsform im Deckelelement 12, welches ebenfalls aus einem Kunststoff besteht, angeordnet. Der Elektrodenstapel 4 ist mit einer Elektrolytlösung 11 gefüllt.

Zur Fixierung der Elektrodenfahnen 5 sind diese aufeinander geschichtet zwischen zwei Flächen eines Ableiterelements 6 aus einem leitenden Material und einer Innenwandung des Deckelelements 12 sowie einer Innenwandung des Gehäuses 2 eingeklemmt. Bei der gezeigten Ausführungsform weist der Volumenkörper 6 eine kubische Form auf. Das als Schraube ausgebildete Kontaktelement 7 ist in einer Bohrung 8 des Ableiterelements 6 aufgenommen, wobei innerhalb der Bohrung 8 ein zum Gewinde der Schraube komplementäres Innengewinde vorhanden ist. Das Kontaktelement 7 erstreckt sich durch eine Öffnung im Deckelelement 12 und durchstösst die aufeinander geschichteten Elektrodenfahnen 5, womit diese zusätzlich fixiert werden und in einem direkten elektrisch leitenden Kontakt zu dieser stehen. Das als Schraube ausgestaltete Kontaktelement 7 weist eine Spitze 9 auf, insbesondere eine selbstschneidende Spitze, mit welcher das Kontaktelement 7 bei der Herstellung der Batterie 1 die aufeinander gestapelten Elektrodenfahnen 5 durchstechen bzw. durchschneiden kann. Durch das Einschrauben des als Schraube ausgestalteten Kontaktelements 7 kann der nötige Anpressdruck erzeugt werden, um die aufeinander gestapelten Elektrodenfahnen 5 sicher zwischen dem Ableiterelement 6 und der Innenwandung des Deckelelements 12 zu befestigen. Da das Ableiterelement 6 aus einem leitenden Material besteht und dieses über eine grosse Kontaktfläche zu den aufeinander gestapelten Elektrodenfahnen 5 verfügt, ist eine sichere Stromübertragung von den Elektrodenfahnen 5 auf das Ableiterelement 6 gewährleistet. Auch zwischen dem als Schraube ausgestalteten Kontaktelement 7 und dem Ableiterelement 6 besteht eine grosse Kontaktfläche, so dass auch hier eine sichere Stromübertragung stattfindet. Insgesamt ist mit der erfindungsgemässen Batterie 1 eine einfache und sichere Befestigung der Elektrodenfahnen 5 gewährleistet, wobei gleichzeitig eine zuverlässige Stromübertragung von den Elektrodenfahnen 5 auf das Kontaktelement 7 (unter anderem via dem Ableiterelement 6) gewährleistet ist. Mittels des Kontaktelements 7 kann eine elektrisch leitende Verbindung zwischen der Batterie 1 sowie einem externen Verbraucher, z.B. einem medizinischen Gerät, hergestellt werden.

Als Zugentlastung weisen die Elektrodenfahnen 5 jeweils eine Biegung 10 auf. Durch diese Biegung 10 kann ein Reissen einzelner Elektrodenfahnen 5 bei einer Bewegung des Elektrodenstapels 4 relativ zum Ableiterelement 6 verhindert werden.

Zwischen dem Kontaktelement 7 und dem Deckelelement 12 ist eine Dichtung 15 angeordnet, um ein Ausfliessen der Elektrolytlösung aus dem Hohlraum zu verhindern.

Die Fig. 2 zeigt ein Detail aus dem Herstellungsverfahren für die Ausführungsform der erfindungsgemässen Batterie 1 gemäss der Fig. 1 als schematisches Schnittbild. Beim gezeigten Herstellungsverfahren werden zunächst der Elektrodenstapel 4 sowie das Ableiterelement 6 auf eine Montagehilfe 13 gelegt. Die Montagehilfe 13 erleichtert die exakte Positionierung des Ableiterelements 6 und des Elektrodenstapels 4 relativ zueinander. Anschliessend werden die Elektrodenfahnen 5 der Kathoden- oder Anodenschichten jeweils aufeinander gestapelt und entsprechend auf eine erste Fläche des Ableiterelements 6 gelegt. Danach wird das Deckelelement 7 auf das Ableiterelement 6 gelegt und ein als Schraube ausgebildetes Kontaktelement 7 durch die Öffnung des Deckelelements 12 durchgeschoben. Mittels der Spitze 9, welche insbesondere als selbstschneidende Spitze ausgebildet ist, können die aufeinander gestapelten Elektrodenfahnen 5 durch das Kontaktelement 7 durchstossen bzw. durchschnitten werden. Das Kontaktelement 7 wird in die entsprechende Bohrung 8 des Ableiterelements 6 eingeschraubt. Nach der Befestigung der Elektrodenfahnen 5 zwischen dem Deckelelement 12 und dem Ableiterelement 6 wird der Elektrodenstapel 4 in den Hohlraum 3 des Gehäuses 2 eingeschoben, vorzugsweise durch eine Öffnung des Gehäuses 2, und das Deckelelement 12 wird mitsamt dem Volumenkörper um 90° verschwenkt, wobei das Deckelelement 12 anschliessend in die Öffnung des Gehäuses eingesetzt wird, um dieses zu verschliessen. Durch diese Schwenkbewegung und dem Einsetzen des Deckelelements 12 in die Öffnung des Gehäuses wird in den Elektrodenfahnen 5 die für als Zugentlastung dienende Biegung erzeugt. Vor dem Verschliessen des Gehäuses 2 wird vorzugsweise der Elektrodenstapel 4 mit der Elektrolytlösung 11 gefüllt.

Es versteht sich, dass nicht nur die Elektrodenfahnen 5 einer Elektrodenart, also der Anodenschichten oder der Kathodenschichten derart mit einem Kontaktelement 7 verbunden werden können, sondern auch die Elektrodenfahnen 5 beider Elektrodenarten. In einem solchen Fall werden zwei Ableiterelemente 6 sowie zwei Kontaktelemente 7 jeweils in der weiter oben beschriebenen Weise beim Herstellungsverfahren verwendet.

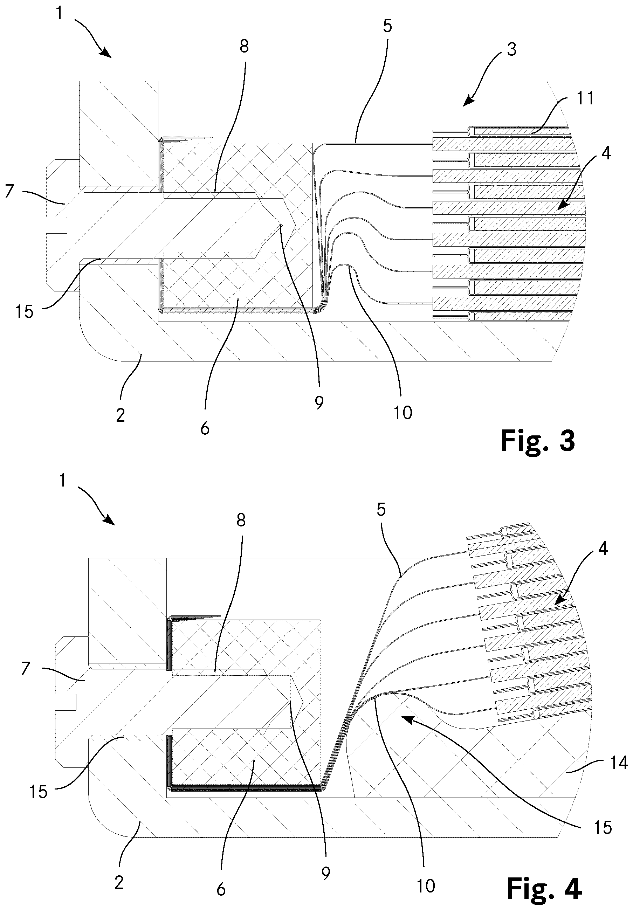

Die Fig. 3 zeigt eine zweite Ausführungsform einer erfindungsgemässen Batterie 1 in einem schematischen Seitenriss. Im Unterschied zur Ausführungsform gemäss Fig. 1 ragt das Kontaktelement 7 durch eine Öffnung im Gehäuse 2 hindurch. Die Elektrodenfahnen 5 der Anoden- bzw. Kathodenschichten sind in analoger Weise aufeinander gestapelt und werden zwischen der Innenwandung des Gehäuses und einem Ableiterelement 6 klemmend gehalten. Zwischen dem Elektrodenstapel 4 und dem Ableiterelement 6 weisen die Elektrodenfahnen 5 jeweils eine Biegung 10 auf, welche bei der gezeigten Ausführungsform schlaufenförmig ausgestaltet ist.

Die Fig. 4 zeigt ein Detail aus dem Herstellungsverfahren für die Ausführungsform der erfindungsgemässen Batterie 1 gemäss der Fig. 3 als schematisches Schnittbild. Das Gehäuse 2 weist einen abnehmbaren Deckel auf oder besteht aus zwei Teilen, welche zusammengefügt werden, so dass bei der Herstellung mit geöffnetem Gehäuse bzw. nicht zusammengefügten Teilen gearbeitet werden kann. Beim Herstellungsverfahren wird zunächst ein Keil 14 auf der Innenwandung des Gehäuses in einer definierten Position aufgelegt. Der Keil 14 weist an seinem spitzen Ende eine gerundete Nase 15 auf, welche im auf der Innenwandung des Gehäuses 2 aufgelegten Zustand des Keils 14 von dieser weg weist. Anschliessend wird der Elektrodenstapel 4 auf den Keil 14 aufgelegt und die Elektrodenfahnen 5 der Anoden- bzw. Kathodenschichten werden aufeinander gestapelt. Die aufeinander gestapelten Elektrodenfahnen 5 werden über die Nase 15 des Keils 14 gelegt und um Ableiterelement 6 gebogen. Das Ableiterelement 6 wird mittels eines als Schraube ausgestalteten Kontaktelements 7, welches durch eine Öffnung des Gehäuses 2 durchgeschoben wird, am Gehäuse 2 befestigt und gegen die Innenwandung des Gehäuses 2 gedrückt, so dass die aufeinander gestapelten Elektrodenfahnen 5 zwischen dem Ableiterelement 6 und der Innenwandung des Gehäuses 2 klemmend gehalten werden. Das Kontaktelement 7 weist wiederum eine Spitze 9, insbesondere eine selbstschneidende Spitze auf, so dass die aufeinander gestapelten Elektrodenfahnen 5 vom Kontaktelement 7 durchstossen bzw. durchschnitten werden können, bevor das Kontaktelement 7 in das Ableiterelement 6 eingeschraubt wird. Der Keil 14 wird anschliessend entfernt und der Elektrodenstapel 4 an seiner Stelle auf die Innenwandung des Gehäuses 2 angeordnet. Dabei bleibt die durch das Aufliegen auf der Nase 15 vorgeformte Biegung 10 der Elektrodenfahnen 5 bestehen, welche als Zugentlastung dient. Durch den Keil 14 sowie der Nase 15 wird verhindert, dass sich die Elektrodenfahnen in die falsche Richtung biegen oder gar abknicken. Schlussendlich wird der Elektrodenstapel 4 mit einem Elektrolyt 11 gefüllt und das Gehäuse 2 der Batterie 1 wird geschlossen bzw. zusammengesetzt.

Es versteht sich, dass nicht nur die Elektrodenfahnen 5 einer Elektrodenart, also der Anodenschichten oder der Kathodenschichten derart mit einem Kontaktelement 7 verbunden werden können, sondern auch die Elektrodenfahnen 5 beider Elektrodenarten. In einem solchen Fall werden zwei Ableiterelemente 6 sowie zwei Kontaktelemente 7 jeweils in der weiter oben beschriebenen Weise beim Herstellungsverfahren verwendet.

## Patentansprüche

1. Batterie, insbesondere Lithium-Ionen Batterie, umfassend:
a) ein Gehäuse aus Kunststoff, welches einen durch eine Innenwandung des Gehäuses begrenzten Hohlraum umfasst;
b) einen Elektrodenstapel, der im Hohlraum angeordnet ist;
c) mindestens ein Kontaktelement, welches von einer Oberfläche des Gehäuses durch das Gehäuse zumindest teilweise in den Hohlraum ragt;
**dadurch gekennzeichnet, dass**
d) innerhalb des Hohlraumes mindestens ein Ableiterelement aus leitendem Material angeordnet ist, der mit dem mindestens einen Kontaktelement leitend verbunden ist,
e) wobei das mindestens eine Ableiterelement derart im Hohlraum angeordnet ist, dass Elektrodenfahnen gleichgepolter Elektroden des Elektrodenstapels klemmend zwischen mindestens einer ersten Fläche des mindestens einen Ableiterelements und der Innenwandung gehalten sind.

2. Batterie gemäss Anspruch 1, **dadurch gekennzeichnet, dass** das mindestens eine Kontaktelement mindestens teilweise in einer Bohrung des mindestens einen Ableiterelements aufgenommen ist.

3. Batterie gemäss Anspruch 2, **dadurch gekennzeichnet, dass** die Bohrung auf der ersten Fläche des mindestens einen Ableiterelements angeordnet ist, wobei die Elektrodenfahnen durch das mindestens eine Kontaktelement durstossen sind.

4. Batterie gemäss einem der Ansprüche 2 oder 3, **dadurch gekennzeichnet, dass** das mindestens eine Kontaktelement als Schraube ausgestaltet ist.

5. Batterie gemäss einem der Ansprüche 3 oder 4, **dadurch gekennzeichnet, dass** das mindestens eine Kontaktelement eine Spitze, insbesondere eine selbstschneidende Spitze aufweist.

6. Batterie gemäss einem der Ansprüche 1 bis 5, **dadurch gekennzeichnet, dass** das mindestens eine Ableiterelement als Quader ausgestaltet ist, wobei die Elektrodenfahnen vorzugsweise zusätzlich zwischen mindestens einer weiteren Fläche des mindestens einen Ableiterelements und der Innenwandung klemmend gehalten sind.

7. Batterie gemäss einem der Ansprüche 1 bis 6, **dadurch gekennzeichnet, dass** die Elektrodenfahnen zwischen dem Elektrodenstapel und dem mindestens einen Ableiterelment jeweils mindestens eine Biegung zur Zugentlastung aufweisen.

8. Batterie gemäss einem der Ansprüche 1 bis 7, **dadurch gekennzeichnet, dass** das mindestens eine Ableiterelement aus einem Metall besteht, insbesondere aus Aluminium, Nickel oder Kupfer.

9. Batterie gemäss einem der Ansprüche 1 bis 8, **dadurch gekennzeichnet, dass** die Batterie über zwei Kontaktelemente sowie über zwei Ableiterelemente verfügt, wobei die Elektrodenfahnen von positiven Elektroden des Elektrodenstapels zwischen mindestens der ersten Fläche eines ersten Ableiterelements und der Innenwandung und die Elektrodenfahnen von negativen Elektroden des Elektrodenstapels zwischen mindestens der ersten Fläche eines zweiten Ableiterelements und der Innenwandung klemmend gehalten sind.

10. Verfahren zur Herstellung einer Batterie, insbesondere einer Batterie gemäss einem der Ansprüche 1 bis 9, umfassend die Schritte:
a) Anordnen eines Elektrodenstapels auf einer Montagehilfe;
b) Anordnen von insbesondere aufeinander gestapelten Elektrodenfahnen gleichpoliger Elektroden des Elektrodenstapels zwischen einer Innenwandung eines offenen Gehäuses aus Kunststoff oder einem Deckelelement aus Kunststoff und mindestens einer ersten Fläche mindestens eines Ableiterelements aus einem leitfähigen Material;
c) Befestigen des mindestens einen Ableiterelements im Gehäuse oder am Deckelelement derart, dass die Elektrodenfahnen klemmend zwischen einer Innenwandung des Gehäuses oder des Deckelelements und dem mindestens einen Ableiterelement gehalten werden;
d) Entfernen der Montagehilfe; und
e) Zusammenbau der Batterie.

11. Verfahren gemäss Anspruch 10, **dadurch gekennzeichnet, dass** die Montagehilfe in der Form eines Keils vorliegt, der an seinem spitzen Ende über eine Nase verfügt, wobei die Montagehilfe vor dem Schritt a) derart auf einen Innenwandung des offenen Gehäuses aufgelegt wird, so dass die Nase von der Innenwandung weg gerichtet ist, und wobei zwischen den Schritten b) und c) die Elektrodenfahnen über diese Nase aufgelegt werden, so dass zwischen dem Elektrodenstapel und dem mindestens einen Ableiterelement dadurch eine Biegung zur Zugentlastung in den Elektrodenfahnen entsteht.

12. Verfahren gemäss Anspruch 10, **dadurch gekennzeichnet, dass** zwischen den Schritten a) und b) das mindestens eine Ableiterelement in einer definierten Position relativ zum Elektrodenstapel auf der Montagehilfe angeordnet wird, wobei im Schritt b) die Elektrodenfahnen auf das mindestens eine Ableiterelement aufgelegt und anschliessend das Deckelelement auf die Elektrodenfahnen angeordnet wird.

13. Verfahren gemäss Anspruch 12, **dadurch gekennzeichnet, dass** nach dem Schritt d) das mindestens eine Ableiterelement relativ zum Elektrodenstapel abgedreht wird, insbesondere um 90°, so dass das mindestens eine Ableiterelement in Richtung des Elektrodenstapels weist, wobei im Schritt e) der Elektrodenstapel zuerst durch eine Öffnung in ein Gehäuse eingeschoben wird und anschliessend die Öffnung durch das Deckelelement verschlossen wird.

14. Verfahren gemäss einem der Ansprüche 10 bis 13, **dadurch gekennzeichnet, dass** im Schritt c) mindestens ein Kontaktelement in der Form einer Schraube verwendet wird, welches durch eine Öffnung des Gehäuses oder des Deckelelements durchgeführt und zumindest teilweise in eine Bohrung des mindestens eine Ableiterelements eingeführt wird,

15. Verfahren gemäss Anspruch 14, **dadurch gekennzeichnet, dass** die Schraube über eine Spitze, insbesondere über eine selbstschneidende Spitze verfügt, mit welcher die aufeinander gestapelten Elektrodenfahnen durchstochen werden.

16. Verfahren gemäss den Ansprüchen 14 oder 15, **dadurch gekennzeichnet, dass** das mindestens eine Ableiterelement durch Eingriff eines Gewindes des als Schraube ausgebildeten mindestens einen Kontaktelements in ein Innengewinde der Bohrung mit dem Gehäuse oder dem Deckelelement befestigt wird.
